# DEMANDE DE BREVET EUROPEEN

(11) **EP 1 265 055 A1**
(43) Date de publication de la demande: **11.12.2002**
(21) Numéro de dépôt: 02291344.6
(22) Date de dépôt: 31.05.2002
(51) Int. Cl.: G01F 15/00

(54) **Dispositif de détection de fraude pour compteur de fluide**

(30) Priorité: 07.06.2001 FR 0107758
(71) Demandeur: Actaris S.A.S., 92542 Montrouge (FR)
(72) Inventeur: Demia, Laurent, 71000 Macon (FR)
(74) Mandataire: Lenne, Laurence

(57) **Abrégé**

Un compteur, en particulier compteur de fluide 1, comprend un corps de compteur muni de moyens de mesure 2 d'un débit de fluide, un totalisateur 5 monté sur le corps de compteur et muni dans sa partie supérieure 8 de moyens d'affichage 7 de la quantité de fluide consommée et dans sa partie inférieure de moyens de conversion 6 destinés à convertir le débit de fluide en quantité de fluide consommée, et des moyens d'indication 12, 14, 15, 16 d'une fraude liée à la partie supérieure 8. Une partie des moyens d'indication d'une fraude 12, 14, 15, 16 est destinée à se détacher partiellement ou totallement de la partie supérieure 8 afin de bloquer totalement le fonctionnement des moyens de conversion 6 après une tentative de fraude sur le compteur et ce même si l'action mécanique entraînant la fraude n'est plus appliquée.

## Description

La présente invention se rapporte à un procédé de détection de fraude ou de tentative de fraude d'un compteur de fluide. L'invention se rapporte également à un dispositif pour la mise en oeuvre du procédé.

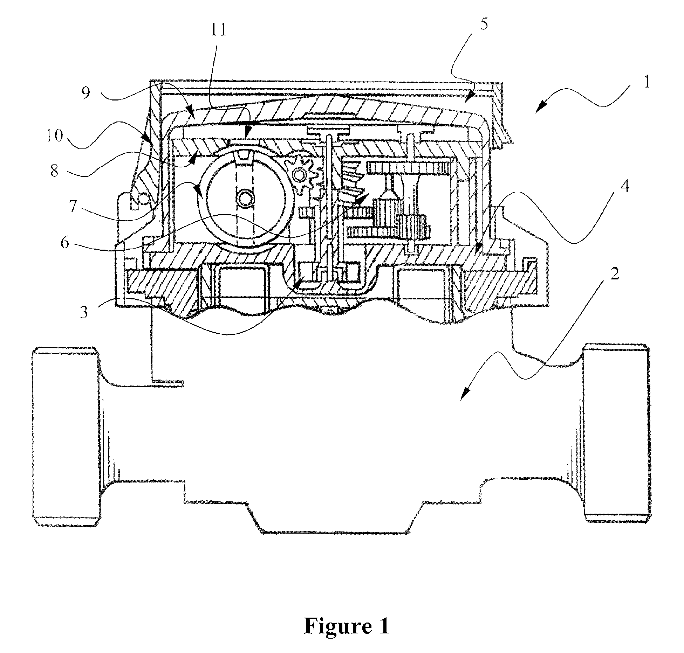

Un compteur de fluide 1 tel que représenté à la figure 1 comporte généralement un corps de compteur 2 muni de moyens de mesure d'un débit de fluide, un totalisateur 5 monté sur le corps de compteur et muni dans sa partie supérieure 8 de moyens d'affichage 7 de la quantité de fluide consommée et dans sa partie inférieure de moyens de conversion 6 destinés à convertir le débit de fluide en quantité de fluide consommée, des moyens d'indication 12, 14, 15, 16 d'une fraude liée à la partie supérieure 8.

Les compteurs de fluide sont destinés à mesurer la quantité de fluide, en particulier de l'eau ou du gaz, consommée par un client afin que le fournisseur de ce fluide puisse facturer la consommation de son client. Certains clients mal intentionnés essayent de diminuer leur consommation mesurée en perturbant le fonctionnement des compteurs. Ces fraudes qui peuvent prendre diverses formes ne sont pas toujours facilement identifiables surtout lorsque le compteur continue de fonctionner en sous-estimant la consommation réelle en fluide.

Il est connu de rendre inviolable à certaines formes de fraude en améliorant certaines caractéristiques mécaniques des compteurs par exemple, la résistance mécanique des totalisateurs à l'écrasement. Cette solution est coûteuse car elle nécessite d'employer des matériaux supplémentaires présentant une meilleure tenue mécanique.
Il est également connu de prévoir des moyens permettant d'identifier qu'une tentative de fraude a eu lieu, par exemple par un indicateur visuel. Cette solution reste dans certaines conditions inefficaces, en particulier lorsque le compteur n'est pas facilement accessible ou lorsque le compteur est relevé à distance par un système de télérelevé automatique ne permettant pas à un releveur de constater l'état du compteur.

Le but de l'invention est d'éviter ces inconvénients en proposant un procédé et un dispositif de détection de fraude peu coûteux, facilement adaptables sur les compteurs existants sans qu'il soit nécessaire d'en modifier profondément la structure et qui permettent de détecter facilement et sûrement une fraude ou une tentative de fraude.

Ce but est atteint par le dispositif de détection de fraude pour compteur, en particulier compteur de fluide comprenant un corps de compteur muni de moyens de mesure d'un débit de fluide, un totalisateur monté sur le corps de compteur et muni dans sa partie supérieure de moyens d'affichage de la quantité de fluide consommée et dans sa partie inférieure de moyens de conversion destinés à convertir le débit de fluide en quantité de fluide consommée, et des moyens d'indication d'une fraude liée à la partie supérieure, une partie desdits moyens d'indication d'une fraude, visible de l'extérieur du totaliseur, étant destinée à se détacher ou à se déformer de façon irréversible de la partie supérieure afin de bloquer totalement le fonctionnement des moyens de conversion lors d'une tentative de fraude sur le compteur.
Selon le procédé de détection de fraude pour compteur, en particulier compteur de fluide, lors d'une tentative de fraude sur le compteur le procédé consiste à : détacher ou déformer une partie, visible de l'extérieur du totaliseur, des moyens d'indication d'une fraude de la partie supérieure, faire pénétrer ladite partie des moyens d'indication d'une fraude dans les moyens de conversion afin de bloquer le fonctionnement desdits moyens de conversion.
La partie des moyens d'indication d'une fraude peut être partiellement ou totalement détachée lorsqu'une paroi supérieure du totalisateur entre en contact avec ladite partie des moyens d'indication d'une fraude.

L'invention présente l'avantage que l'index indiquant la consommation d'eau reste figé sur une valeur et ne peut plus évoluer de sorte que le fournisseur de fluide qui relie l'index est alerté par le fait que la consommation n'évolue pas entre les relevés successifs. Ainsi, ce fournisseur peut prendre toutes mesures nécessaires au remplacement du compteur défectueux. Le fait que le compteur soit bloqué et que l'index reste figé est bien plus avantageux qu'un compteur fraudé qui continue à comptabiliser une consommation en la sous-estimant car il est alors possible de détecter la fraude sur une durée bien plus courte.
Un autre avantage est que les moyens d'indication d'une fraude servent à la fois de moyens de blocage destinés à stopper le fonctionnement du totalisateur, mais également d'indicateur de tentative de fraude visible de l'extérieur du totalisateur.
Encore un autre avantage est que même si l'action mécanique destinée à frauder le compteur s'arrête (par exemple en enlevant la pince permettant d'obtenir un écrasement du totalisateur), le compteur reste bloqué de manière permanente.
L'invention peut s'appliquer à des compteurs d'eau, à des compteurs de gaz et également à tout compteur de fluide dans lequel un problème similaire à celui exposé dans le présent texte se pose.

D'autres avantages et caractéristiques de l'invention apparaîtront dans la description suivante détaillée, non limitative, de divers modes de réalisation, en référence aux dessins annexés parmi lesquels :
- la figure 1 représente une vue en coupe partielle d'un compteur muni d'un totalisateur selon l'art antérieur,
- la figure 2 représente un dispositif de détection de fraude selon un premier mode de réalisation destiné à être intégré dans le totalisateur de la figure 1, avant qu'une tentative de fraude n'ait eu lieu,
- la figure 3 représente un dispositif de détection de fraude selon un premier mode de réalisation destiné à être intégré dans le totalisateur de la figure 1, après qu'une tentative de fraude ait eu lieu,
- la figure 4 représente un dispositif de détection de fraude selon un second mode de réalisation destiné à être intégré dans le totalisateur de la figure 1, avant qu'une tentative de fraude n'ait eu lieu,
- la figure 5 représente un dispositif de détection de fraude selon un second mode de réalisation destiné à être intégré dans le totalisateur de la figure 1, après qu'une tentative de fraude ait eu lieu.

Comme représenté en coupe partielle en vue de côté à la figure 1 et désigné dans son ensemble par la référence générale notée 1, un compteur de fluide connu, par exemple un compteur d'eau, comprend un premier boîtier 2 qui renferme une chambre de mesure communiquant avec une amenée et une évacuation d'eau.
Le compteur de fluide peut être du type à turbine ou à piston oscillant. Le piston ou la turbine (non représentés) de la chambre de mesure transmet son mouvement de rotation à un organe d'accouplement magnétique 3 partiellement représenté sur la figure 1. Le système d'accouplement magnétique est constitué par exemple de deux éléments aimantés placés chacun de part et d'autre d'une paroi 4 séparant le premier boîtier 2 d'un second boîtier 5.
L'organe d'accouplement 3 communique le mouvement de rotation du piston ou de la turbine à un arbre qui est relié mécaniquement à un train d'engrenages 6.
Le second boîtier 5 forme un totalisateur à affichage à rouleaux qui coopère de manière connue avec ce train d'engrenages 6 pour que les informations de comptage transmises par le piston ou la turbine assurent la rotation appropriée des rouleaux 7 et donc l'affichage de la consommation de fluide correspondante.

L'accouplement entre le piston et le train d'engrenages pourrait également être réalisé par un système d'accouplement non magnétique comportant un arbre traversant de part en part la paroi 4.

Dans les compteurs de fluide, et notamment les compteurs d'eau 1 tels que celui représenté la figure 1, il est connu de disposer dans un boîtier un totalisateur 5 à rouleaux qui, d'une part, reçoit mécaniquement et/ou magnétiquement des informations de comptage d'un volume de fluide fournies par le premier boîtier 2 dans lequel se trouve un élément mesurant en contact avec le fluide et, d'autre part, affiche ces informations sur lesdits rouleaux 7 qui sont visibles depuis l'extérieur du boîtier à travers une lumière 11 aménagée dans une paroi 8 du boîtier. Généralement, le totalisateur 5 est un bloc dont la paroi supérieure 9 est réalisée dans un matériau plastique transparent au moins dans la partie qui est visible de l'extérieur et où sont disposés les rouleaux 7. Un capot de protection 10 pivotant peut également être fixé sur le compteur afin d'éviter en position abaissée le dépôt de toute sorte de particules sur la paroi supérieure du bloc 9 empêchant la lecture des rouleaux.
Lorsque le capot est levé, du fait de la transparence du bloc 9 et de la lumière 11 pratiquée dans la paroi 8, un observateur qui regarde le totalisateur voit les rouleaux 7 du totalisateur et les chiffres indiqués par ces rouleaux.

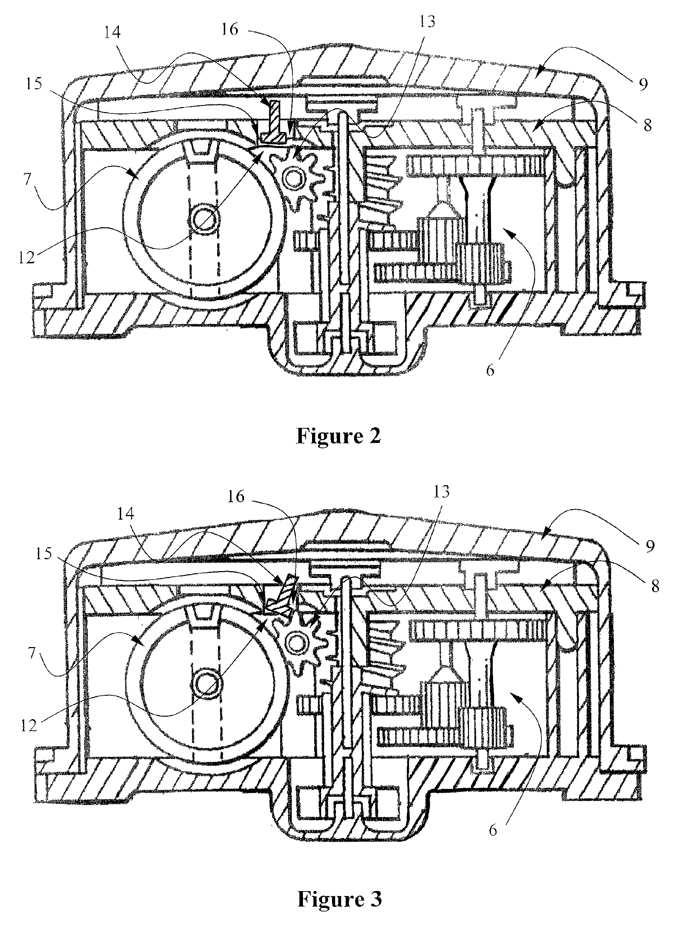

Un premier mode de réalisation de l'invention est représenté aux figures 2 et 3, lesquelles représentent une vue en coupe du totalisateur 5 sans capot de protection avant et après une tentative de fraude respectivement.
Une lumière 12 est pratiquée dans la paroi 8 au dessus d'une roue dentée ou d'un rochet 13 du train d'engrenages 6.
Une pièce 14 est fixée dans cette lumière de sorte qu'une partie de la pièce fasse saillie de la lumière en direction de la paroi supérieure du bloc 9.
La pièce 14 est fixée au moyen d'au moins une butée 15. Avantageusement, la pièce 14 est fixée au moyen de deux butées 15, 16.
Lorsqu'une action mécanique extérieure est exercée sur le totalisateur, par exemple en cas de fraude, la paroi supérieure du bloc 9 en plastique transparent du totalisateur encaisse la majeure partie des efforts statiques et dynamiques. Lorsque la paroi supérieure du bloc 9 s'affaisse, elle rentre en contact avec la pièce 14, ce qui entraîne la déformation ou la rupture de la ou des butées 15, 16. La pièce déformée ou détachée vient alors bloquer la roue dentée ou le rochet 13 du train d'engrenages 6.
La pièce 14 se déforme ou se détache partiellement ou totalement selon la force de l'action mécanique exercée et/ou la résistance du matériau employé pour la ou les butées 15, 16.
La figure 3 représente une variante de réalisation de ce premier mode de réalisation dans laquelle la pièce est fixée au moyen de deux butées 15, 16 et dans laquelle la rupture d'une seule butée 16 provoque le blocage de la roue dentée ou du rochet 13, bloquant ainsi les rouleaux 7 du totalisateur. Cette variante est particulièrement avantageuse puisque dans ce cas un blocage des rouleaux du totalisateur est obtenu de façon certaine quelque soit la position du compteur de fluide une fois monté sur une canalisation.

Selon d'autres variantes possibles non représentées, les butées 15, 16 se déforment ou se détachent totalement pour venir provoquer le blocage de la roue dentée ou du rochet 13.
Il faut noter que ce blocage est obtenu de façon permanente même si l'action mécanique extérieure exercée sur le totalisateur est réduite ou cesse.

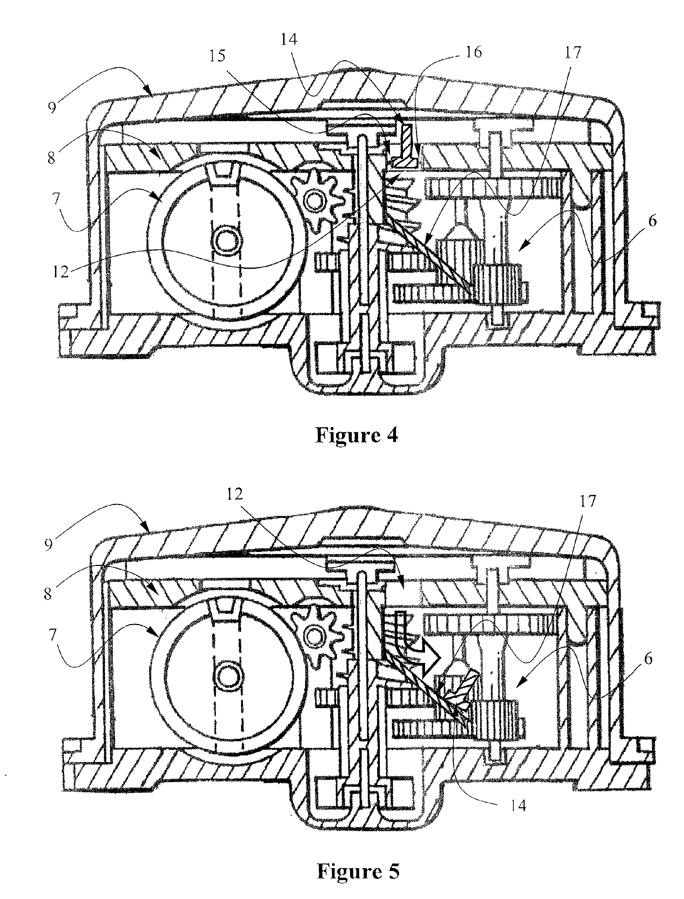

Un second mode de réalisation de l'invention est représenté aux figures 4 et 5, lesquelles représentent une vue en coupe du totalisateur 5 sans capot de protection avant et après une tentative de fraude respectivement.
Une lumière 12 est pratiquée dans la paroi 8. Dans ce mode de réalisation, la lumière n'est pas directement pratiquée au dessus d'une roue dentée ou d'un rochet 13 du train d'engrenages 6. Un plan incliné 17 est prévu dans le totalisateur sous la lumière 12 en direction d'une roue dentée ou d'un rochet du train d'engrenages 6.
La pièce 14 est fixée dans la lumière de sorte qu'une partie de la pièce fasse saillie de la lumière en direction de la paroi supérieure du bloc 9.
La pièce 14 est fixée au moyen d'au moins une butée 15. Avantageusement, la pièce 14 est fixée au moyen de deux butées 15, 16.
Lorsqu'une action mécanique extérieure est exercée sur le totalisateur, par exemple en cas de fraude, la paroi supérieure du bloc 9 en plastique transparent du totalisateur s'affaisse et rentre en contact avec la pièce 14, ce qui entraîne la rupture de la ou des butées 15, 16. La pièce détachée tombe alors par gravité sur le plan inclinée 17 et glisse dans le sens de la flèche indiquée à la figure 5 en direction de la partie d'engrenage à bloquer. La pièce vient alors en bout de course bloquer la roue dentée ou le rochet 13 du train d'engrenages 6.
La résistance du matériau employé pour la ou les butées 15, 16 est prévue pour que la pièce 14 se détache totalement quelque soit la force de l'action mécanique exercée sur la paroi supérieure du bloc 9.

Pour l'ensemble des modes de réalisation et variantes respectives présentées, la pièce 14 a une forme, en coupe, de T inversé comportant une base sur laquelle est fixé une tige. Avantageusement, la base est un plateau présentant une forme adaptée à la forme de la lumière mais de dimensions inférieure, par exemple un plateau de forme cylindrique et la tige est de forme cylindrique allongée. D'autres formes permettant de remplir la fonction de la pièce 14 sont également envisageables.

## Revendications

1. Dispositif de détection de fraude pour compteur, en particulier compteur de fluide (1) comprenant un corps de compteur muni de moyens de mesure (2) d'un débit de fluide, un totalisateur (5) monté sur le corps de compteur et muni dans sa partie supérieure de moyens d'affichage de la quantité de fluide consommée et dans sa partie inférieure de moyens de conversion destinés à convertir le débit de fluide en quantité de fluide consommée, et des moyens d'indication (12, 14, 15, 16) d'une fraude liée à la partie supérieure, **caractérisé en ce qu'**une partie (14) desdits moyens d'indication d'une fraude, visible de l'extérieur du totaliseur, est destinée à se détacher ou à se déformer de façon irréversible de la partie supérieure afin de bloquer totalement le fonctionnement des moyens de conversion lors d'une tentative de fraude sur le compteur.

2. Compteur selon la revendication 1, dans lequel la partie supérieure comprend une paroi (8), les moyens de conversion comprennent un train d'engrenages (6) muni d'au moins une roue dentée (13) et la partie desdits moyens d'indication d'une fraude (12, 14, 15, 16) comprend une pièce (14) fixée dans une lumière (12) pratiquée dans la paroi (8) par au moins une butée (15, 16).

3. Compteur selon la revendication 2, dans lequel la pièce (14) a une forme en T inversé et une partie de ladite pièce fait saillie de la lumière de la lumière (12) en direction d'une paroi supérieure (9) du totalisateur (5).

4. Compteur selon la revendication 2 ou 3, dans lequel un plan incliné (17) est fixé dans le totalisateur (5) sous la lumière (12) et orienté en direction du train d'engrenages (6).

5. Procédé de détection de fraude d'un compteur de fluide comprenant un corps de compteur muni de moyens de mesure d'un débit de fluide, un totalisateur monté sur le corps de compteur et muni dans sa partie supérieure de moyens d'affichage de la quantité de fluide consommée et dans sa partie inférieure de moyens de conversion destinés à convertir le débit de fluide en quantité de fluide consommée, et des moyens d'indication d'une fraude liée à la partie supérieure, **caractérisé en ce que** lors d'une tentative de fraude sur le compteur le procédé consiste à: détacher une partie, visible de l'extérieur du totaliseur, des moyens d'indication d'une fraude de la partie supérieure, faire pénétrer ladite partie des moyens d'indication d'une fraude dans les moyens de conversion afin de bloquer le fonctionnement desdits moyens de conversion.

6. Procédé de détection de fraude d'un compteur de fluide selon la revendication 5, pour lequel la partie des moyens d'indication d'une fraude est partiellement détachée lorsqu'une paroi supérieure (9) du totalisateur (5) entre en contact avec ladite partie des moyens d'indication d'une fraude.

7. Procédé de détection de fraude d'un compteur de fluide selon la revendication 5, pour lequel la partie des moyens d'indication d'une fraude est totalement détachée lorsqu'une paroi supérieure (9) du totalisateur (5) entre en contact avec ladite partie des moyens d'indication d'une fraude.

8. Procédé de détection de fraude d'un compteur de fluide comprenant un corps de compteur muni de moyens de mesure d'un débit de fluide, un totalisateur monté sur le corps de compteur et muni dans sa partie supérieure de moyens d'affichage de la quantité de fluide consommée et dans sa partie inférieure de moyens de conversion destinés à convertir le débit de fluide en quantité de fluide consommée, et des moyens d'indication d'une fraude liée à la partie supérieure, **caractérisé en ce que** lors d'une tentative de fraude sur le compteur le procédé consiste à: déformer de façon irréversible une partie, visible de l'extérieur du totaliseur, des moyens d'indication d'une fraude de la partie supérieure, faire pénétrer ladite partie des moyens d'indication d'une fraude dans les moyens de conversion afin de bloquer le fonctionnement desdits moyens de conversion.
